# EUROPEAN PATENT SPECIFICATION

(11) **EP 1 141 556 B1**
(45) Date of publication and mention of the grant of the patent: **09.06.2004**
(21) Application number: 99960076.0
(22) Date of filing: 30.11.1999
(51) Int. Cl.: F16B 7/04, F16L 3/10

(54) **CLAMPING DEVICE FOR MOUNTING ON A PROFILE MEMBER**
AUF EINEN PROFILKÖRPER ZU BEFESTIGENDE KLEMME
DISPOSITIF DE FIXATION DESTINE A ETRE MONTE SUR UN ELEMENT PROFILE

(30) Priority: 23.12.1998 SE 9804568
(43) Date of publication of application: 10.10.2001
(73) Proprietor: CUE DEE PRODUKTER AB, 915 21 Robertsfors (SE)
(72) Inventor: HEMMERVALL, Jan-Olof, S-915 31 Robertsfors (SE)
(74) Representative: Zetterström, Alf
(86) International application number: PCT/SE1999/002229
(87) International publication number: WO 2000/039470

(56) References cited:
- US-A- 3 157 415
- US-A- 3 642 333
- US-A- 4 300 852
- US-A- 5 017 038

## Description

The present invention relates to a clamping device for mounting on a profile member.

More particularly, the invention relates to such a device of the kind comprising two clamping jaws which are intended to be placed in front of each other at mutually opposite sides of the profile member and each of which comprises an inner portion and two end portions, projecting in mutually opposite directions from the inner portion and formed integrally with the inner portion, said end portions being provided with through holes for clamping bolts by means of which the two clamping jaws can be brought to bear under pressure against the profile member with contact surfaces thereof, formed by the inner portions of the clamping jaws.

A disadvantage of known clamping devices of said kind is that they are suited to be mounted only on profile members having dimensions and shapes varying within fairly narrow limits. Therefore, in order to satisfy the need for clamping devices for different types of profile members having strongly varying dimensions and shapes, one has previously been forced to offer for sale a large number of different clamping devices comprising clamping jaws of different shape and size.

The invention has for its purpose to provide an improved clamping device of the kind initially specified being of such a nature as to permit it to be mounted on profile members of many different kinds, exhibiting a large variation in respect of their dimensions and shapes.

The clamping device according to the invention is characterized in that the inner portion of at least one of the two clamping jaws is provided with profiled contact surfaces of mutually different shapes at mutually opposite sides of said portion and that the end portions of said at least one clamping jaw consist of flat portions lying in a common plane.

By designing at least one of the two clamping jaws of the clamping device in the above manner, one can make it possible to adapt the device to different profile members having strongly varying dimensions and shapes, since said clamping jaw can be turned at choice with one or the other of its two sides against the profile member in question.

US-A 3,642,333 discloses a clamping device of the kind set forth in the preamble of claim 1. Each clamping jaw of said device has a contact surface by which it can be brought to bear under pressure against the profile member only at one side thereof. Therefore, also said device suffers from the disadvantage of known devices previously mentioned.

At one side thereof, the inner portion of said at least one clamping jaw may suitably have the general shape of a projection protruding from the clamping jaw, while, at its other side, it may have the general shape of a recess provided in the clamping jaw.

Said recess may preferably have an at least approximately V-shaped profile, while, at least along the major portion of its length, said projection may have a height decreasing in a direction from its middle and towards each end portion of the clamping jaw. Moreover, at its middle, said projection may have a recess provided therein which similarly to the recess previously mentioned preferably may have a generally V-shaped profile.

The clamping jaw according to the invention may be utilized to support one or more outer elements that may be affixed thereto. In order, in this case, to permit both clamping jaws to be provided with a profiled contact surface at each of the two mutually opposite sides thereof so that each clamping jaw may be turned at choice with one or the other side thereof against the profile member, said outer elements may be affixed to the clamping device for instance with the aid of supporting means that may be affixed to at least one of the two clamping bolts of the device.

According to an embodiment of the invention, the clamping device may comprise only one clamping jaw which is provided with a profiled contact surface at each of its two opposite sides and the other clamping jaw may be provided with a profiled contact surface only at one side thereof, while, at its other side, it may be provided with protruding means for supporting one or more outer elements that may be affixed to the clamping device.

Although, in this case, only one clamping jaw may be turned at choice with one or the other of its two sides against the profile member, the clamping device may still be mounted on many different profile members having dimensions and shapes varying within wide limits.

At its said one side, the inner portion of said other clamping jaw may then preferably have the general shape of a recess provided in said clamping jaw and suitably having an at least approximately V-shaped profile with a preferred angle width of 90°.

In order to make it possible to produce the clamping device at very low costs, the clamping jaws may advantageously consist of cut pieces of extruded aluminium profiles.

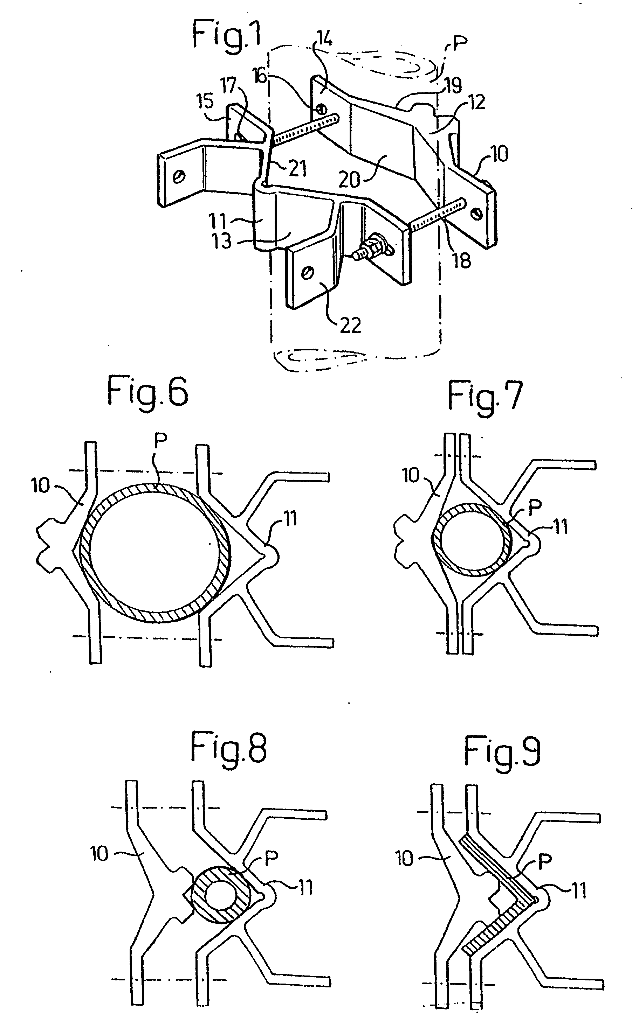

The invention is further described with reference to the accompanying drawings, in which:-
Figure 1 shows a perspective view of a clamping device according to an embodiment of the invention, selected by way of example only, said device being intended to be mounted on a profile member,

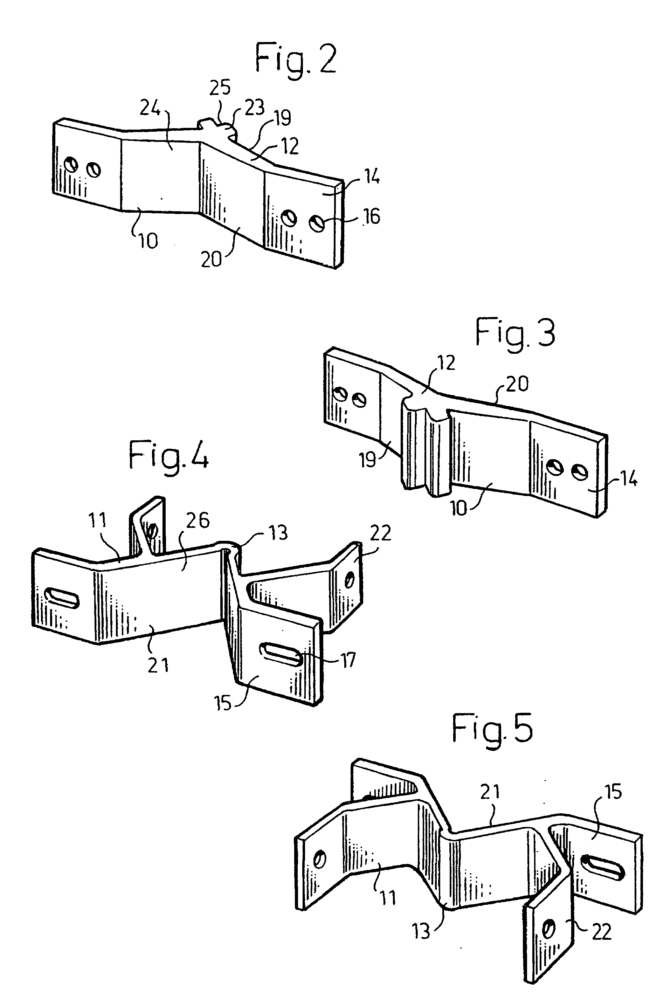

Figures 2 and 3 show two different perspective views of a first clamping jaw forming part of the device according to Figure 1,
Figures 4 and 5 show two different perspective views of a second clamping jaw forming part of the device according to Figure 1,
Figure 6 shows a side elevation of the clamping device according to Figure 1, illustrating said device mounted on a circular-cylindric tube having a comparatively large diameter,
Figure 7 shows a side elevation of the clamping device according to Figure 1, illustrating said device mounted on a circular-cylindric tube having a smaller diameter,
Figure 8 shows a side elevation of the clamping device according to Figure 1, illustrating said device mounted on a circular-cylindric tube having a still smaller diameter, and
Figure 9 shows a side elevation of the clamping device according to Figure 1, illustrating said device mounted on an angle profile member.

The clamping device shown in the drawings comprises two clamping jaws 10 and 11 which are intended to be placed in front of each other at opposite sides of the profile member P on which the clamping device is to be mounted. Each of the two clamping jaws 10 and 11 comprises an inner portion 12 and 13, respectively, and two flat end portions 14 and 15, projecting in mutually opposite directions from the inner portion and formed integrally with said portion and lying in a common plane. End pcrtions 14 and 15 are provided with through holes 16 and 17, respectively, for threaded clamping bolts 18 by means of which the two clamping jaws 10 and 11 can be brought to bear under pressure against profile member P with contact surfaces formed by their inner pcrtions 12 and 13, respectively.

In the embodiment shown in the drawings, inner portion 12 of clamping jaw 10 is provided with profiled contact surfaces 19 and 20 of mutually different shapes at mutually opposite sides of said portion. As a consequence, clamping jaw 10 may be turned at choice with one of the other side thereof against profile member P. Hereby, a substantially increased possibility of adapting the device to different profile members of strongly varying shapes and dimensions is achieved.

Inner portion 13 of clamping jaw 11, on the other hand, is provided with a profiled contact surface 21, intended to bear against profile member P, only at its one side. The reason is that, at its other side, said portion is provided with two projecting flanges 22 which are intended to serve as supporting means for one or more outer elements that may be affixed to the device.

At its one side, inner portion 12 of clamping jaw 10 has the general shape of a projection 23, protruding from said clamping jaw and forming contact surface 19, while at its other side, it has the general shape of a recess 24 of obtuse-angled V-shaped profile, provided in said clamping jaw and forming contact surface 20. Along the major portion of its length, projection 23, which at its middle is provided with a generally V-shaped recess 25, has a height above the common plane of the two end portions 14 which decreases in a direction from the middle of said projection and towards each end thereof. Nearest to the bottom of recess 25, the two opposite walls of the recess form an angle of 90° with each other, while the portions of said walls located nearest to the opening of the recess form a larger angle with each other.

A its one side, inner portion 13 of clamping jaw 11 has the general shape of a recess 26 of 90° V-shaped profile, provided in said clamping jaw and forming contact surface 21.

Clamping jaws 10 and 11 may preferably consist of pieces which have been cut from extruded aluminium profiles and which, after the cutting operation, have been provided with the required through holes 16 and 17, respectively, for the clamping bolts 18. Furthermore, each of the two clamping jaws may suitably be symmetrical around a central plane, extending in a direction transversal to the longitudinal direction of the clamping jaw in question.

Both clamping jaws may be provided with a profiled contact surface at each of their mutually opposite sides so that each clamping jaw may be turned at choice with one or the other of its two sides against the profile member.

## Claims

1. Clamping device for mounting on a profile member (P), said device comprising two clamping jaws (10, 11) which are intended to be placed in front of each other at mutually opposite sides of the profile member (P) and each of which comprises an inner portion (12, 13) and two end portions (14, 15), projecting in mutually opposite directions from the inner portion and formed integrally with the inner portion, said end portions (44,45) being provided with through holes (16, 17) for clamping bolts (18) by means of which the two clamping jaws (10, 11) can be brought to bear under pressure against the profile member (P) with contact surfaces (19, 20, 21) thereof, formed by the inner portions (12, 13) of the clamping jaws, **characterized in that** the inner portion (12) of at least one (10) of the two clamping jaws (10, 11) is provided with profiled contact surfaces (19, 20) of mutually different shapes at mutually opposite sides of said portion (12) and that the end portions of said at least one clamping jaw (10) consist of flat portions (14) lying in a common plane.

2. Clamping device according to claim 1, **characterized in that**, at one side thereof, the inner portion (12) of said at least one clamping jaw (10) has the general shape of a projection (23) protruding from the clamping jaw, while, at its other side, it has the general shape of a recess (24) provided in the clamping jaw.

3. Clamping device according to claim 2, **characterized in that** said recess (24) has an at least approximately V-shaped profile.

4. Clamping device according to claim 2 or 3, **characterized in that**, at least along the major portion of its length, said projection (23) has a height decreasing in a direction from its middle and towards each end portion (14) of the clamping jaw (10).

5. Clamping device according to claim 4, **characterized in that**, at its middle, said projection (23) has a recess (25) provided therein.

6. Clamping device according to claim 5, **characterized in that** the recess (25) provided in said projection (23) has a generally V-shaped profile.

7. Clamping device according to any of the preceding claims, **characterized in that** it comprises only one clamping jaw (10) which is provided with a profiled contact surface (19, 20) at each of its two opposite sides, and that the other clamping jaw (11) has a profiled contact surface (21) only at one side thereof, while, at its other side, it is provided with protruding means (22) for supporting one or more outer elements that may be affixed to the clamping device.

8. Clamping device according to claim 7, **characterized in that**, at its said one side, the inner portion (13) of said other clamping jaw (11) has the general shape of a recess (26) provided in said clamping jaw.

9. Clamping device according to claim 8, **characterized in that** said recess (26) has an at least approximately V-shaped profile.

10. Clamping device according to claim 9, **characterized in that** said V-shaped profile has an angle width of 90°.

11. Clamping device according to any of the preceding claims, **characterized in that** the clamping jaws (10, 11) consist of cut pieces of extruded aluminium profiles.

## Patentansprüche

1. Klemme zum Befestigen auf einem Profilkörper (P), wobei die Klemme zwei Klemmbacken (10, 11) umfasst, die voreinander an einander gegenüberliegenden Seiten des Profilkörpers (P) angeordnet sein sollen und die jeweils einen Innenabschnitt (12, 13) und zwei Endabschnitte (14, 15) umfassen, welche in zueinander entgegengesetzten Richtungen von dem Innenabschnitt hervorragen und einstückig mit dem Innenabschnitt ausgebildet sind, wobei die Endabschnitte (14, 15) mit Durchgangslöchern (16, 17) für Klemmbolzen (18) versehen sind, mittels deren die zwei Klemmbacken (10, 11) zum Anliegen unter Druck gegen den Profilkörper (P) mit Berührungsflächen (19, 20, 21) davon gebracht werden können, die durch die Innenabschnitte (12, 13) der Klemmbacken ausgebildet sind, **dadurch gekennzeichnet, dass** der Innenabschnitt (12) von zumindest einer (10) der Klemmbacken (10, 11) mit profilierten Berührungsflächen (19, 20) von zueinander unterschiedlichen Formen an einander gegenüberliegenden Seiten des Abschnitts (12) versehen ist, und dass die Endabschnitte der zumindest einen Klemmbacke (10) aus flachen Abschnitten (14) bestehen, die in einer gemeinsamen Ebene liegen.

2. Klemme nach Anspruch 1, **dadurch gekennzeichnet, dass** der Innenabschnitt (12) der zumindest einen Klemmbacke (10) an einer Seite davon die allgemeine Form eines von der Klemmbacke hervorragenden Vorsprungs (23) aufweist, während er an seiner anderen Seite die allgemeine Form einer in der Klemmbacke vorgesehenen Aussparung (24) aufweist.

3. Klemme nach Anspruch 2, **dadurch gekennzeichnet, dass** die Aussparung (24) ein zumindest ungefähr V-förmiges Profil aufweist.

4. Klemme nach Anspruch 2 oder 3, **dadurch gekennzeichnet, dass** der Vorsprung (23) zumindest entlang des Hauptabschnitts seiner Länge eine in Richtung von seiner Mitte und auf jeden Endabschnitt (14) der Klemmbacke (10) abnehmende Höhe aufweist.

5. Klemme nach Anspruch 4, **dadurch gekennzeichnet, dass** der Vorsprung (23) an seiner Mitte eine darin vorgesehene Aussparung (25) aufweist.

6. Klemme nach Anspruch 5, **dadurch gekennzeichnet, dass** die in dem Vorsprung (23) vorgesehene Aussparung (25) ein im allgemeinen V-förmiges Profil aufweist.

7. Klemme nach einem der vorhergehenden Ansprüche, **dadurch gekennzeichnet, dass** sie nur eine Klemmbacke (10) umfasst, die mit einer profilierten Berührungsfläche (19, 20) an jeder ihrer gegenüberliegenden Seiten versehen ist, und dass die andere Klemmbacke (11) eine profilierte Berührungsfläche (21) nur an einer Seite davon aufweist, während sie auf ihrer anderen Seite mit hervorragenden Mitteln (22) zum Halten einer oder mehrerer an der Klemme anbringbarer äusserer Elemente versehen ist.

8. Klemme nach Anspruch 7, **dadurch gekennzeichnet, dass** der Innenabschnitt (13) der anderen Klemmbacke (11) an seiner einen Seite die allgemeine Form einer in der Klemmbacke vorgesehenen Aussparung (26) aufweist.

9. Klemme nach Anspruch 8, **dadurch gekennzeichnet, dass** die Aussparung (26) ein zumindest ungefähr V-förmiges Profil aufweist.

10. Klemme nach Anspruch 9, **dadurch gekennzeichnet, dass** das V-förmige Profil eine Winkelweite von 90° aufweist.

11. Klemme nach einem der vorhergehenden Ansprüche, **dadurch gekennzeichnet, dass** die Klemmbacken (10, 11) aus geschnittenen Stücken von extrudierten Aluminiumprofilen bestehen.

## Revendications

1. Dispositif de serrage destiné à être monté sur un élément profilé (P), ledit dispositif comprenant deux mâchoires de serrage (10, 11) qui sont destinées à être placées l'une face à l'autre sur des faces mutuellement opposées de l'élément profilé (P) et qui comprennent chacune une partie interne (12, 13) et deux parties d'extrémité (14, 15), en saillie dans des directions mutuellement opposées à partir de la partie interne et formées de manière unitaire avec la partie interne, lesdites parties d'extrémité (14, 15) comportant des orifices traversants (16, 17) destinés à des vis de serrage (18) au moyen desquelles les deux mâchoires de serrage (10, 11) peuvent être amenées à porter sous pression contre l'élément profilé (P) avec leurs surfaces de contact (19, 20, 21), formées par les parties internes (12, 13) des mâchoires de serrage, **caractérisé en ce que** la partie interne (12) d'au moins l'une (10) des deux mâchoires de serrage (10, 11) comporte des surfaces de contact profilées (19, 20) de formes mutuellement différentes au niveau des côtés mutuellement opposés de ladite partie (12) et **en ce que** les parties d'extrémités de ladite au moins une mâchoire de serrage (10) consistent en parties plates (14) reposant dans un plan commun.

2. Dispositif de serrage selon la revendication 1, **caractérisé en ce que**, sur son premier côté, la partie interne (12) de ladite au moins une mâchoire de serrage (10) présente la forme générale d'une saillie (23) s'étendant à partir de la mâchoire de serrage, alors que, sur son autre côté, elle présente la forme générale d'une cavité (24) formée sur la mâchoire de serrage.

3. Dispositif de serrage selon la revendication 2, **caractérisé en ce que** ladite cavité (24) présente un profil au moins approximativement en forme de V.

4. Dispositif de serrage selon la revendication 2 ou 3, **caractérisé en ce que**, au moins suivant la partie principale de sa longueur, ladite saillie (23) représente une hauteur décroissante dans une direction partant de son centre et s'étendant vers chaque partie d'extrémité (14) de la mâchoire de serrage (10).

5. Dispositif de serrage selon la revendication 4, **caractérisé en ce que**, au niveau de son centre, une cavité (25) est formée à l'intérieur ladite saillie (23).

6. Dispositif de serrage selon la revendication 5, **caractérisé en ce que** la cavité (25) formée sur ladite saillie (23) présente un profil sensiblement en forme de V.

7. Dispositif de serrage selon l'une quelconque des revendications précédentes, **caractérisé en ce qu'**il comprend uniquement une mâchoire de serrage (10) qui comporte une surface de contact-profilée (19, 20) sur chacune de ses faces opposées et **en ce que** l'autre mâchoire de serrage (11) présente une surface de contact profilée (21) uniquement sur une de ses faces, alors que sur son autre face, elle comporte un moyen en saillie (22) destiné à supporter un ou plusieurs éléments externes qui peuvent être fixés sur le dispositif de serrage.

8. Dispositif de serrage selon la revendication 7, **caractérisé en ce que**, sur ladite première face, la partie interne (13) de ladite autre mâchoire de serrage (11) présente la forme générale d'une cavité (26) formée sur ladite mâchoire de serrage.

9. Dispositif de serrage selon la revendication 8, **caractérisé en ce que** ladite cavité (26) présente un profil au moins approximativement en forme de V.

10. Dispositif de serrage selon la revendication 9, **caractérisé en ce que** ledit profil en forme de V présente un angle de 90°.

11. Dispositif de serrage selon l'une quelconque des revendications précédentes, **caractérisé en ce que** les mâchoires de serrage (10, 11) consistent en pièces découpées à partir de profilés extrudés en aluminium.
